# EUROPEAN PATENT APPLICATION

(11) **EP 4 524 856 A1**
(43) Date of publication of application: **19.03.2025**
(21) Application number: 23197188.8
(22) Date of filing: 13.09.2023
(51) Int. Cl.: G06Q 20/06, G06Q 20/36

(54) **SECURE TOKEN TRANSACTION UNIT WITHIN AN ELECTRONIC PAYMENT TRANSACTION SYSTEM**

(71) Applicant: Giesecke+Devrient advance52 GmbH, 81677 München (DE)
(72) Inventor: Zeller, Peter, 81677 München (DE); Húska, Jakub, 81677 München (DE)
(74) Representative: Ter Meer Steinmeister & Partner

(57) **Abstract**

The invention relates to a secure token transaction unit within an electronic payment transaction system, the secure token transaction unit comprising a secure memory for storing a plurality of tokens, wherein each token comprises a token-individual token secret, preferably a private key of a token-individual cryptographic key pair and a token value; a control module which is adapted to: a) generate, for at least two input tokens of the plurality of tokens, a public key using a cryptographic function based on the private key of each token, wherein the token value and the public key form a token reference, resulting in at least two input token references; b) transform the token values of the at least two input tokens to generate at least one output token value, wherein the at least one output token value and at least one output public key form at least one output token reference; c) generate a replacement request comprising, the at least two input token references and the at least one output token reference; d) generate a combined key by combining the private keys of the at least two input tokens; e) sign the replacement request using the generated combined key; and f) send the signed replacement request to a secure token reference register of the electronic payment transaction system. The invention further relates to a terminal device comprising the secure token transaction unit. The invention further relates to a secure token reference register within an electronic payment transaction system, an electronic payment transaction system, a method for assuring the integrity of a central bank digital currency in an electronic payment transaction system, and data structure for storing a signed replacement request.

## Description

The present invention relates to a secure token transaction unit and a secure token reference register within an electronic payment transaction system. The invention also relates to the electronic payment transaction system itself and a method for assuring the integrity of payments in the electronic payment transaction system. The invention further relates to a data structure for a signed register request within the electronic payment transaction system.

Tokens - also referred to as digital assets, electronic coins, coin data sets - may represent any digital asset, in particular a digital currency, preferably a central bank digital currency, short CBDC. These tokens are issued and deleted by a unit of the transaction system, such as an issuing authority, or a central bank unit or a commercial bank unit, hereinafter also referred to as secure token issuing unit.

Electronic token transactions and/or storage of tokens and any associated transaction data and/or storage data must be safe and secure and so, means for protecting confidentiality, integrity, and availability of exchanged and/or stored token data must be implemented. This is true for electronic payment transactions and associated payment transactions and payment storages in which a monetary value is linked with each token, subsequently also referred to as a token value.

There are different technical approaches for a digital asset e.g., digital currency such as central bank digital currency, CBDC, issued by a central bank.

According to a first approach, tokens are merely cryptographically secured by the central bank unit and the cryptographically secured tokens are exchanged directly between token management units - also referred to as wallets - of the participants in an encrypted manner. The exchanged token may also be stored in an encrypted manner. The token management units can verify the authenticity of the tokens based on the cryptographic security, such as keys and signatures, and for example checks a certificate from the central bank and/or the other token management units for validity within the certificate hierarchy in advance via online access or following the offline-protocol of the system.

According to a second approach, tokens are stored in a centralized or decentralized blockchain/distributed ledger of the transaction system, e.g., organized by a central bank unit. For a transaction, an ownership of a token record changes in the blockchain for which a lot of information (sender/recipient/amount) is required and/or even published. Sender and recipient of the token need an online access to the blockchain at the time of the transaction.

According to a favorable third approach as for instance described in WO 2020 / 212 331 A1 or WO 2023 / 036 458 A1 tokens are stored in a local token management unit (also called wallet or payment application unit or secure element) to be directly exchanged between participants of an electronic payment transaction system. The transferred token can validly be used after receipt from another participant without a need of approval or verification via an online connection. So, if an online connection is not available or inconvenient or should not be used for a specific token transaction, it remains possible to validly transfer tokens directly between participants in the electronic payment transaction system. For security-, verification- and registration-purposes, a token register stores token references of all valid tokens without knowing the tokens itself. So, the user can check validity of a received token. The token register only stores token references of the corresponding token. Tokens can be further modified by each individual participant, e.g., ownership of tokens can be switched from one participant to another participant (SWITCH modification), tokens can be split into plural tokens, e.g., for obtaining a token with a reduced monetary value (SPLIT modification) and/or plural tokens can be merged to a single token, e.g., for obtaining a token with a higher monetary value (MERGE modification).

For managing the tokens, such as performing the transactions and storing the tokens, secure token management units, also known as wallets, are used. For the second approach these wallets are referred to as account wallets. For the third approach, these wallets are referred to as account-wallets or token-wallets.

A wallet can be provided as a hardware wallet, e.g. as a smart card issued to a participant, or can be a so-called hosted-wallet, e.g. a wallet that is hosted by the individual service provider.

Electronic token transactions and/or storage of tokens and any associated transaction data and/or storage data in an electronic token transaction system must be safe and secure and so, means for protecting confidentiality, integrity, and availability of exchanged and/or stored token data must be implemented. This is especially true for electronic payment transactions and associated payment transactions and payment storages in which a monetary value is linked with each token.

Transactions of tokens may involve multiple value notes, for instance for merge modification with more than two input tokens or split modifications to more than two output tokens. However, such transactions are to be executed in a series of modifications with intermediate tokens since each input token needs to be verified individually.

Moreover, the direct transaction of tokens can be executed offline between two secure token transaction units, i.e., without the need of an internet connection. An online communication channel is only required for security-, verification- and registration-purposes. Offline token transactions may be registered after their executing, which can lead to a chain of transaction to be registered. Consequently, the register request of a secure token transaction unit may comprise several token references of which each needs to be verified individually.

Hence, there is a need for more efficiently assuring the integrity of replacement requests for multiple notes of secure token transaction units in an electronic payment transaction system.

The above-identified objectives are solved with the features of the independent patent claims. Further advantageous embodiments are described in the dependent patent claims.

In an aspect of the present invention there is provided a secure token transaction unit within an electronic payment transaction system.

The secure token transaction unit comprises a secure memory for storing a plurality of tokens, wherein each token comprises a token-individual token secret, preferably a private key of a token-individual cryptographic key pair and a token value. The private key of a cryptographic key pair may include a random number and optionally a counter value or a constant value. Each token may be stored as an encrypted token in the secure memory to enhance security-at-rest.

The secure token transaction unit further comprises a control module. The control module is adapted to generate, for at least two input tokens of the plurality of tokens, a public key using a cryptographic function based on the private key of each token, wherein the token value and the public key form a token reference, resulting in at least two input token references. The cryptographic function may be a one-way cryptographic encryption function, e.g., based on an asymmetric or symmetric encryption scheme.

The control module is further adapted to transform the token values of the at least two input tokens to generate at least one output token value, wherein the at least one output token value and at least one output public key form at least one output token reference. Preferably, the output public key is assigned to a further secure token transaction unit. Alternatively, the output public key is a local public key of the secure token transaction unit. In other words, the control module of the secure token transaction unit is configured to generate one or more output token references, especially upon modification commands being processed by the secure token transaction unit, wherein the modification commands are only performed for tokens having the same token-type information. This feature enables the secure token transaction unit to participate in the favorable third approach as described above.

The control module is also adapted to generate a replacement request comprising the at least two input token references and the at least one output token reference. The replacement request may represent the modification command by which the control module of the secure token transaction unit generates one or more output token references.

The control module is further adapted to generate a combined key by combining the private keys of the at least two input tokens.

The control module is further adapted to sign the replacement request using the combined private keys of the at least two input tokens and to send the signed replacement request to a secure token reference register of the electronic payment transaction system. In other words, The control module is further adapted to sign to the replacement request based on a combination of the private keys of the at least two input tokens. In again other words: in the step of signing, a combined key is generated by combining the private keys of the at least two input tokens, and the combined key is used for signing the replacement request.

The combined key can be a temporary key valid only for the signing.

Preferably, the control module is also adapted to receive a replacement confirmation, in particular a signed replacement confirmation, from the secure token reference register.

The secure token transaction unit may be a secure token-wallet which is used to locally manage the tokens in a secure memory element, to transform or modify the tokens and to register references to the tokens in the electronic payment transaction system. The token may be stored in a token storage that is also managed by the token-wallet.

In contrast to known token transaction, the secure token transaction unit has the advantage that independent on how many tokens are involved in a token transaction, only one single signature is generated to assure the ownership of the private keys of the input tokens. This single signature is generated based on a combination of the private keys of the input tokens. This combined key may be temporary.

Known modifications to the token include switching, splitting, and merging of one or more tokens. These modifications require registering the output token reference in the payment system in case their validity should be proven.

Previously, each modification type is encoded in a different modification command, also referred to as replacement request. So, for splitting a token, merging two tokens, or switching a token individual modification commands each having a distinct syntax are required.

The secure token transaction unit, in contrast, may carry out any token transaction using only a single replacement request type. The replacement request may further comprise a secure replacement command identifier, the input token references, and the output token references of the respective token transaction enables to execute any of the previously known modifications. The secure replacement command identifier may be for instance a byte identifier which discriminates the new replacement request from previously known replacement requests. In one embodiment, the inventive replacement request may implement a change-modification. The type of token modification encoded with a replacement request according to an aspect of the invention may be deduced merely from the number of input token references and the number of output token references, which are both completely flexible. For instance, two input token references and one output token reference indicate to merge the respective input tokens to an output token. Similarly, more than two input tokens may be merged using the replacement request. Also, more than one token may be switched or split using a single replacement request according to an aspect of the invention.

The new replacement request for modifying two or more input tokens in interaction with the generation of a single signature based on the combination of the private keys of the input tokens enables a secure token transaction for multiple tokens which requires significantly less signatures for assuring the integrity of the token transaction request than in known secure token transaction units. For signing a merge-modification of prior art, one signature per input token reference is required. Each signature is generated independently based on the respective private key of the input token reference. For this example, the secure token transaction unit according to an aspect of the invention saves memory space as only half of the number of signatures is required to sign the replacement request. The resulting replacement request thus is shorter and requires less bandwidth for its transfer to the secure token reference register.

Preferably, the replacement request further comprises a secure replacement command identifier that is represented by a command type code, wherein each of the input token references and the output token references is assigned a tag code, wherein the tag code specifies whether a respective token reference is an input token reference. The tag code may be a single byte. The tag code may further specify which version of the token reference, i.e., 32-bit version or 64-bit version, is used. In this embodiment, the token value of each input token reference may be uint32 big-endian encoded for a tag code of 0 and uint64 big-endian encoded for a tag code of 1, or vice versa. The public key of each input token reference may be uncompressed and represented using 65 bytes, or, preferably, compressed and represented using 33 bytes.

By way of the tag code, the token references of the replacement command may be distinguished between input token references and output token references. This feature therefore not only replaces any of the previously known switch-, split- and merge-modifications but also enables to transact multiple tokens within one single replacement request. By indicating which token is to be replaced (input token) and which token is to be generated (output token), and by imposing a global boundary condition according to which each token transaction is an equal value transaction, the replacement request unambiguously encodes any token transaction for the secure token reference register. An equal value transaction is a token transaction according to which the sum of the token values of the output tokens is equal to the sum of the token values of the input tokens, i.e., no token value (monetary value) is created nor deleted by token transactions executed between secure token transaction units. Note that only dedicated units, e.g., minting units, in the electronic payment system may create and/or delete tokens.

Alternatively, or additionally, the replacement request may comprise an integer value which encodes the number of input tokens in the replacement request. The integer value may be arranged in a sequence following the secure replacement command identifier and preceding the input token references.

The components of the signed replacement request may be concatenated such that each replacement request is a string, preferably encoded in the hexadecimal system. Prior to encoding in the hexadecimal system, the signed replacement request may be further encrypted, e.g., using an asymmetrical encryption scheme.

In a preferred embodiment, the signed replacement request is stored in the secure memory of the secure token transaction unit as a proof. This proof may be particularly useful in case no data connection to the T-Reg is available or is not desired, e.g., in an offline token transaction.

The secure token transaction unit may be assigned to a participant or user in the electronic payment transaction system, who may be a natural person, a legal person, an organization, and/or a machine, e.g., an internet-of-things, element.

In a preferred embodiment, the control module is further adapted to generate an initial transfer request related to an output token reference and to send the initial transfer request to the further secure token transaction unit via the direct secure communication connection.

The initial transfer request may be a request for a monetary value of a participant or user in the electronic payment transaction system to be transferred to a secure token transaction unit. The initial transfer request may be either issued by a first secure token transaction unit storing the input tokens or, preferably, by a second secure token transaction unit expecting the output token.

In a preferred embodiment, the control module is further adapted to receive a replacement confirmation of the secure token reference register and verify the replacement confirmation and/or send the replacement confirmation to the further secure token transaction unit. The replacement confirmation may be signed by the secure token reference register which further increases the security in the electronic payment transaction system. Forwarding the replacement confirmation to the further secure token transaction unit has the additional advantage that the further secure token transaction unit receives the knowledge that the generated token (output token) is valid and registered in the secure token reference register. So, the generated token may be used for subsequent token transactions.

In a preferred embodiment, the combination of the private keys is generated by adding the private keys.

Preferably, the control module is adapted to sign the register request based on the combination of the private keys of the at least two input tokens based on an elliptic curve digital signature algorithm, ECDSA. Accordingly, a combined private key may be calculated by adding the random numbers representing the private keys and calculating the module of the order of the selected elliptic curve. A corresponding combined public key may be either generated based on the combined private key using the cryptographic function, or, preferably, may be calculated by adding the respective public keys on the elliptic curve. The combined public key forms part of the signed replacement request having at least two input token references.

In one preferred embodiment, the control module is further adapted to establish a direct secure communication connection to the further secure token transaction unit. The control module is adapted to generate at least one token-individual cryptographic key pair for the at least one output token comprising at least one output private key and at least one output public key and to send the at least one output private key to the further secure token transaction unit via the direct secure communication connection. Preferably, the private key is received, stored and sent in encrypted form.

Alternatively, the control module is adapted to receive the at least one output public key from the further secure token transaction unit via the direct secure communication connection. This embodiment has the advantage that there is no transfer of private keys required. Upon receiving the initial transfer request from the secure token transaction unit which, e.g., may be a monetary value such as the token value of the output token to be generated, the further secure token transaction unit may generate a token-individual cryptographic key pair comprising an output private key and an output public key. The output private key, i.e., the private key of the output token to be generated, thus remains in the further secure token transaction unit, while the input private keys remain in the secure token transaction unit. The further secure token transaction unit is adapted to transfer the generated output public key to the secure token transaction unit based on which the latter may generate and sign the replacement request to the secure token transaction register. Hence, the reference to the output token, of which at least the private key is generated in the further secure token transaction unit may be registered by the secure token transaction unit.

In a preferred embodiment, the replacement request comprises multiple tagged input token references and multiple tagged output token references related to multiple token transactions, wherein each tagged input token reference and each tagged output token reference comprise a tag code, wherein the tag code specifies related input token references and output token references, wherein the control module is adapted to sign the replacement request based on the combination of the private keys of the multiple input token references. So, the tag code may encode token-type information, e.g., identify corresponding groups of input token references and output token references. In this embodiment, a single replacement request thus may register a chain of token transactions at the secure token reference register. Such a chain of token transaction may be generated offline between two or more secure token transaction units, in particular during a period in which the secure token transaction unit generating the replacement request failed to establish or rejected a connection to the secure token reference register.

A secure token transaction unit (as described herein), also referred to as secure wallet, secure token management unit; token wallet; and/or wallet may be used to locally manage token in a secure element or secure memory itself and/or to modify the tokens and to register the token in the electronic token transaction system. The token may be stored in a token storage that is also managed by the token wallet.

Each secure token transaction unit comprises one secure token transaction unit identifier, also referred to as wallet-ID or wallet identification data. The secure token transaction unit identifier is assigned to a specific secure token transaction unit for uniquely identifying the secure token transaction unit in the electronic token transaction system. The secure token transaction unit identifier is preferably stored in the specific secure wallet.

The secure token transaction unit identifier may be generated at the unit that issues the secure token transaction unit, such as a financial service provider unit or a central entity in the transaction system. The generation may comprise a coding of data by control means of that issuing unit. In such a case, the service provider unit may code the secure token transaction unit identifier. This coding is performed to assign the secure token transaction unit identifier with the secure token transaction unit that is to be issued. Each token transaction made by this secure token transaction unit and/or each token being managed, such as stored, by this secure token transaction unit can be locally protocolled and in case a suspicious transaction or fraudulent pattern is identified, the protocols may be reviewed.

Alternatively, the secure token transaction unit identifier may be generated by an official authority, a secure token issuing unit, e.g., a central bank unit. In this case, the secure token transaction unit identifier may be received by control means of the secure token transaction unit issuing unit or the secure register unit.

In a preferred embodiment, the secure token transaction unit identifier is a mandatory data to be transmitted between individual users in the electronic transaction system for direct exchange of tokens. This may be a system requirement to ensure high standard security and in such a case, the secure token transaction unit identifier is not only used to uniquely identify the secure token transaction unit, but also possible to eventually identify the "real" user by resolving the user information by using an additional secure register unit.

Provided is further a terminal device comprising a secure token transaction unit according to one of the preceding claims or an electronic wallet, wherein the electronic wallet comprises the secure token transaction unit according to one of the preceding claims.

In an embodiment, the secure token transaction unit is a secure element that is operatively connected to the terminal device of a participant in the electronic payment system.

In an embodiment, the secure token transaction unit is a secure wallet that is hosted at a service provider unit.

The secure token transaction unit may comprise a token storage as a physical entity. The secure token transaction unit may be configured to access the token storage. The token storage may be a token vault of this secure token transaction unit. Each secure token transaction unit in the transaction system may comprise its own token storage.

From such token storage accessible by the secure token transaction unit, each token can be transferred to any other secure token transaction unit, e.g., owned by a customer of the secure token transaction unit.

The secure token transaction unit may be a secure wallet that may be a hardware security module built in hardware or software to enable tamperproof and secure access to the tokens.

Provided is also a secure token reference register within an electronic payment transaction system. The secure token reference register may be a unit within the electronic payment transaction system. The token reference register may be either a central register or database of the transaction system or a decentralized register or a database such as a DLT of the transaction system TS. It may be a regular database, a blockchain, a DLT or anything else suitable to store token references.

The secure token reference register comprises a secure memory for storing registered token references. The secure token reference register also comprises a secure communication interface for receiving and sending data to one or more secure token transaction units of the electronic payment transaction system. Further, the secure token reference register comprises a control module.

The control module is adapted to receive a signed replacement request from the secure token transaction unit, wherein the signed replacement request comprises at least one secure replacement command identifier, at least two input token references, at least one output token reference, and one signature generated based on a combination of the private keys related to the at least two input token references.

The control module is further adapted to determine whether the at least two input token references are valid by verifying the at least two token references based on the signature.

In case the at least two input token references are valid, the control module is also adapted to store the at least one output token reference in the secure memory of the secure token reference register and to send a replacement confirmation to the secure token transaction unit.

So, by means of the signed replacement request, an output token becomes registered as a valid token in the token transaction system and can be used for further online or offline electronic payment transactions.

In a preferred embodiment, the secure token reference register further comprises a verification unit, wherein the verification unit is adapted to determine whether the at least two input token references are valid and/or a token value check unit, wherein the token value check unit determines whether a transaction of token values according to the replacement command is valid. The control module is adapted to store the at least one output token reference only if the verification unit and/or the token value check unit successfully validate the received replacement request. Accordingly, replacement requests encoding invalid token transaction may be discarded. The token value check unit assures that no additional token value is created by the token transaction, which is a crucial rule of the electronic payment transaction system.

A token is valid if the corresponding token reference is stored in the secure token reference register, meaning that the token is registered in the token reference register.

The token check unit may test whether the difference between the sum of all input token values of the at least two input token references and the sum of all output token values of the at least one output token reference is zero and/or whether a total sum of token values in the electronic payment transaction system remains constant upon executing the secure replacement commands on the input token values.

In a preferred embodiment, the control module is further adapted to generate a cryptographic key pair, comprising a private key and a public key, and to sign the replacement confirmation based on the generated private key, wherein the signed replacement confirmation comprises the generated public key. Signing the replacement confirmation further enhances the security in the electronic payment transaction system.

Provided is further an electronic payment transaction system comprising at least two secure token transaction units as described herein and a secure token reference register as described herein.

In a preferred embodiment, the electronic payment system is a central bank management system, the token reference register is an instance of a central bank management system and each token represents a monetary value in a central bank digital currency.

Provided is also a method for assuring the integrity of a central bank digital currency in an electronic payment transaction system, the electronic payment transaction system comprising at least two secure token transaction units and a secure token reference register.

The method comprises generating, for at least two input tokens of a plurality of tokens stored in a secure memory of a first secure token transaction unit, a public key using a cryptographic function based on a private key of each token, wherein the token value and the public key form a token reference, resulting in at least two input token references. The method further comprises providing at least one output public key assigned to the second secure token transaction unit in the first secure token transaction unit. The method also comprises transforming the token value of the at least two input tokens to generate at least one output token value in the first secure token transaction unit. The at least one output token value and the at least one output public key form at least one output token reference. The method further comprises generating a replacement request comprising the at least two input token references and the at least one output token reference in the first secure token transaction unit. The method further comprises generating a combined key by combining the private keys of the at least two input tokens. The method also comprises signing the replacement request using the generated combined key (in other words, the method also comprises signing the replacement request based on a combination of the private keys of the at least two input tokens) in the first secure token transaction unit. The method comprises the first secure token transaction unit sending the signed replacement request to the secure token reference register of the electronic payment transaction system and the secure token reference register receiving the signed replacement request from the first secure token transaction unit. The method further comprises determining in the secure token reference register whether the at least two input token references are valid by verifying the at least two input token references based on the signature. In case the at least two input token references are valid, the method also comprises storing the at least one output token reference in a secure memory of the secure token reference register and the secure token reference register sending a register confirmation to the first secure token transaction unit.

The method has the advantage of saving space both in the secure token transaction unit for generating and preferably storing the signed replacement request, and in the secure token reference register for processing and optionally storing the signed replacement request since the number of signatures is reduced to one for any token transaction. This advantage scales up for token transaction involving multiple input tokens, such as merge transaction, or chains of token transaction.

Provided is also a data structure for storing a signed replacement request. The data structure comprises a secure replacement command identifier being represented as a single byte command type code. The data structure further comprises at least two tagged input token references, wherein each tagged input token reference comprises an input tag code and an input token reference comprising an input token value and an input public key, at least one tagged output token reference, wherein each tagged output token reference comprises an output tag code and an output token reference comprising an output token value and an output public key, and a secure signature being generated based on a combination of the private keys related to the at least two tagged input token references. The secure replacement command identifier, the at least two tagged input token references, the at least one tagged output token reference and the secure signature are concatenated in the data structure. The data structure, upon being received by a secure token reference register, causes the secure token reference register to verify the signed replacement request and store the at least one output token reference in a secure memory of the secure token reference register.

The secure replacement command identifier as well as the input tag code and the output tag code comprise instructions which are automatically recognized and processed by the secure token reference register. This processing in turn determines how the respective token references are to be transformed and/or replaced in the secure token register, such that an output token becomes registered as a valid token in the token transaction system and can be used for further online or offline electronic payment transactions.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a secure electronic payment transaction system for token transactions with secure token transaction units according to an aspect of the invention.
Fig. 2 shows an exemplary embodiment of a secure token transaction unit according to an aspect of the invention.
Fig. 3 shows an exemplary embodiment of a secure token reference register according to an aspect of the invention.
Fig. 4 shows an exemplary flow chart of a method according to an aspect of the invention.
Fig. 5a shows an exemplary embodiment of the data structure representing a signed replacement request according to an aspect of the invention.
Fig. 5b shows another exemplary embodiment of the data structure representing a signed replacement request according to an aspect of the invention.
Fig. 5c shows an exemplary embodiment of the data structure representing a signed replacement request for a chain of token transactions according to an aspect of the invention.
Fig. 5d shows another exemplary embodiment of the data structure representing a signed replacement request for a chain of token transactions according to an aspect of the invention.

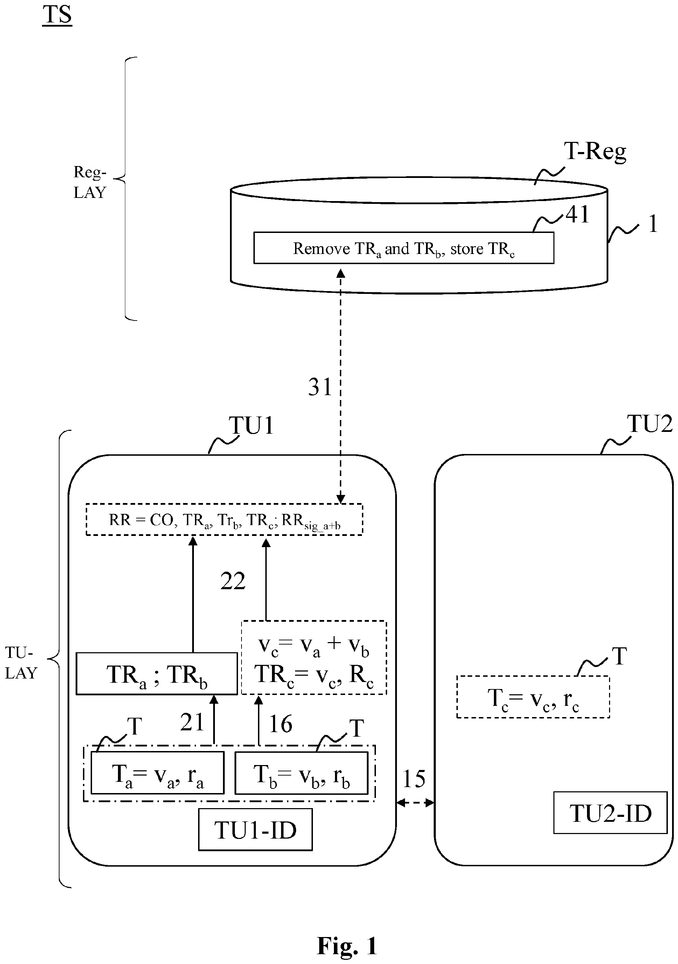

Fig. 1 provides an overview over a secure electronic payment transaction system for token transactions with secure token transaction units according to an aspect of the invention.

Each token T in the secure electronic payment transaction system can be modified, such as split, merged or switched, by transforming tokens according to modification-commands CO in each token transaction unit TU.

Modification-commands are compliant with the above described third approach. Each modification can be registered in the secure token reference register T-Reg by replacement requests (=registration requests) RR.

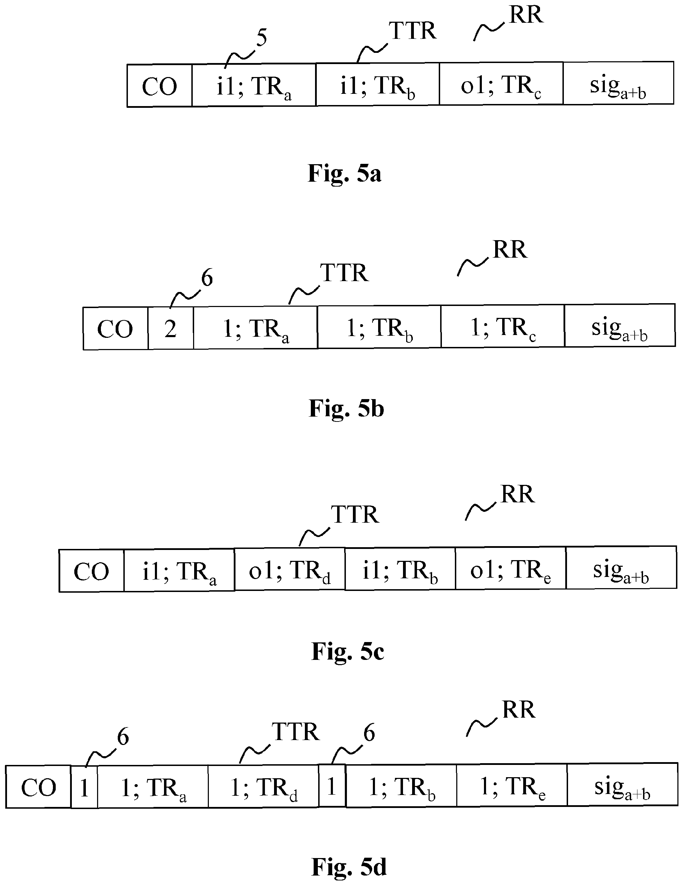

According to one aspect of the invention, a single type of modification commands or replacement requests RR may be used to represent any modification of tokens T applied by a secure token transaction unit TU. This new replacement request RR is also referred to as a change modification, and its data structure is discussed in some more detail with respect to Figs. 5a-5d.

Previously, token transaction involving multiple tokens, needed to be executed using multiple commands, in particular when merging more than two input tokens or splitting an input token to more than two output tokens. Transactions based on multiple commands, however, have the disadvantage that verifier-clients need specific error handling for the case that only a fraction of the modification commands succeed, and others fail. This disadvantage results from the fact that multiple commands cannot be verified atomically, i.e., all modification commands succeed, or all fail.

Further, multiple commands require more space than a single replacement request according to an aspect of the invention, as intermediate token values and more signatures are required.

A token T is uniquely represented by a token value v as well as a token-individual token secret, preferably a private key of a token-individual cryptographic key pair. The private key may include a random number r and further values such as counters or constant values. The token value v may be also referred to as monetary value as it represents the money in a central bank digital currency which is represented by a token. Thus, each token T in this electronic payment transaction system TS has at least two token elements.

The token value v as a first mandatory token element can be specified in a range of values from 1 to 231-1, preferably in a range of values from 1 to 263-1. The random number r may be a number in the range of 0 to 2256 -1, i.e., the order of an elliptic curve, for example secp256r1. For example, the token value v is a 32-bit token element of type integer, preferably a 64-bit token element of type integer.

The random number r as a second mandatory token element is at least a part of a private key of a token-individual key pair. The random number r is unique and secret in the electronic payment transaction system TS and may not be published or reused. The generation of the random number r must be unpredictable. For example, the random number r is a 32-Byte token element of type integer.

For each token T, a token reference TR can be stored in the token reference register T-Reg. The token reference TR comprises the token value v (of the token T) and a public key R that corresponds to the private key r of the token-individual key pair. The token reference TR of the token T can be viewed at any time in the register T-Reg of the electronic payment transaction system TS.

A secure token transaction unit TU1 is in possession of two tokens Ta; Tb that comprise a token value va; vb as well as a random number ra; rb. The secure token transaction unit TU1 generates in step 21 a public key R for each of the token Ta; Tb, which are input tokens in this example. Next, or in parallel, the secure token transaction unit merges the two tokens Ta; Tb using a change modification in step 16. Accordingly, the token values va; vb are added to a new token value vc. The token value vc thus comprises the sum of the token values va and vb, such that no additional token value is generated. In the secure token transaction unit TU1 is provided a public key Rc corresponding to the generated token value vc. The public key Rc may be either generated in the secure token transaction unit TU1, or, preferably by a further secure token transaction unit TU2 and transferred to the secure token transaction unit TU1 by way of a secure communication channel 15. To generate the public key Rc, the secure token transaction unit TU1; TU2 must be in possession of the corresponding random number rc, which eventually is a mandatory element in the output token Tc.

The public key R of the token-individual key pair is generated by applying a cryptographic function to the private key r of the token-individual key pair. This function is difficult to reverse and thus provides the transaction system TS with the required security. It holds that R = r * G, where G can be, for example, a global parameter of the transaction system TS, e.g., a generator points of an elliptic curve, here the secp256r1 curve. Any other suitable cryptographic function to receive the public key R value can be applied as well.

Based on the public key Rc and the generated token value rc, the secure token transaction unit TU1 generates the token reference TRc, which is uniquely assigned to the output token Tc.

This token reference TRc can be sent in step 31 to the secure token reference register T-Reg in form of a registration request RR by the TU1 (being generated in step 22), if necessary, together with a command CO, in particular a secure replacement command identifier, which may be stored in a single byte.

According to a core aspect of the invention, the replacement request RR is signed with a combination of the private keys ra; rb of the input tokens Ta; Tb. Signing the replacement request RR enables to verify that the secure token transaction unit TU1 is in possession/knowledge of the input tokens Ta; Tb, further enhancing security in the transaction system TS.

It is the overall goal of the invention to reduce the number of signatures needed to sign a replacement request RR for transactions involving multiple input tokens. The inventors realized that combining the private keys of the input tokens by calculating the modulus N of the sum of the random numbers, wherein N is the order to the selected elliptic curve, enables to verify all input tokens in a single verification step using a single signature sig. Accordingly, the combined public key may be calculated using a one-way function, in particular a cryptographic function. Within the ECDSA framework, the combined public key may be generated by adding the corresponding public keys on the selected elliptic curve.

The replacement request RR may be sent to the secure token reference register T-Reg in step 31 to register the generated token reference TRc in the secure token reference register T-Reg. Every secure token transaction unit TU in the electronic payment transaction system TS that receives the token Tc from TU1 can now verify whether Tc is a valid token T in the electronic payment transaction system TS.

Each TU may store the generated replacement request RR as a so-called PROOF in case, no data connection to the secure token reference register T-Reg is available or is not desired, e.g., in an offline token transaction.

The signed replacement request RR may be received in the secure token reference register T-Reg. After the replacement request RR has been checked by the T-Reg, the token references TR to the input tokens, TRa and TRb, are removed from the register T-Reg and the output token reference TRc is stored in the register T-Reg in step 41 in the secure memory 1 of the register T_Reg. With storing the output token reference TRc, the token Tc is registered in the electronic payment transaction system TS.

Each token reference TR is uniquely assigned to a token T in the transaction system TS and the token reference TR is used to register the token T in the transaction system TS. The TR is therefore the public representation of T from the direct transaction layer TU-LAY. Sole knowledge or possession of the TR alone does not allow the T to be transferred and is not equivalent to the TU being in possession of the T. The TR is used to prevent multiple spending attempts and checks whether token values v have been generated in an improper manner. Therefore, the TR and, if applicable, the history (the proofs) about the tokens T and the RR from TU(s) are stored in the T-Reg.

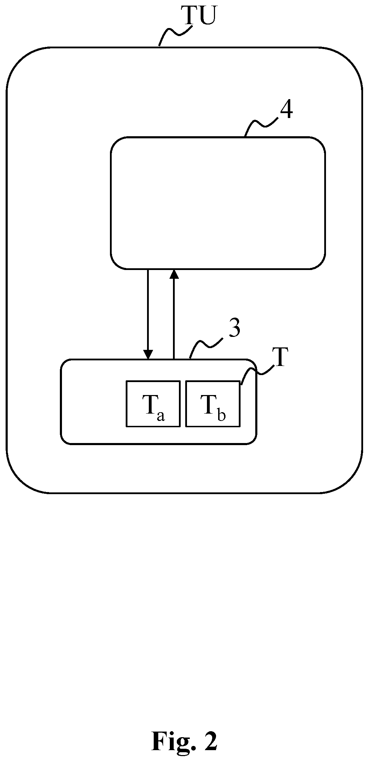

Fig. 2 shows an exemplary embodiment of a secure token transaction unit according to an aspect of the invention. All elements shown in Fig. 2 and described with reference to Fig. 2 are identical to corresponding elements of Fig. 1 if same reference signs are used unless it is otherwise stated. For these same elements, a further explanation is omitted.

The secure token transaction unit TU comprises a secure memory 3 for storing tokens T and a control module 4 for modifying and exchanging tokens T and generating token references TR.

A token T may be stored, for example, in a secure wallet, as the secure token transaction unit TU. These wallets are, for example, software applications within a terminal device in which the TU is operationally embedded. A wallet may be set up as an application on a smartphone, smartcard, or payment terminal. The wallet is used to securely manage tokens T of the TU, generate token references TR, modify tokens T, and/or exchange tokens T. Wallets are used to communicate with the token reference register T-Reg, generate registration requests RR to the token reference register T-Reg, modify tokens T (change) and/or perform transaction of token T to another TU.

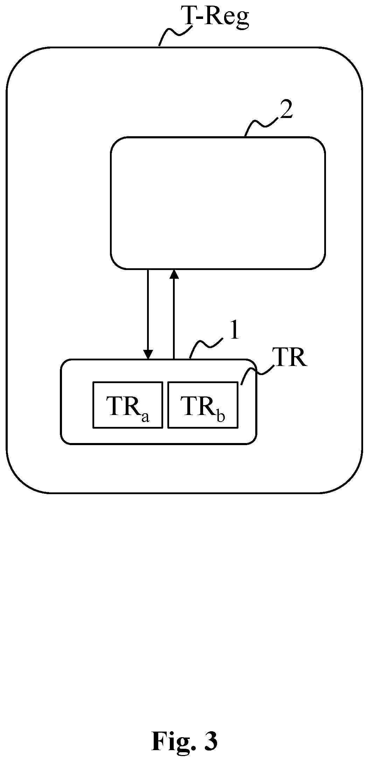

Fig. 3 shows an exemplary embodiment of a secure token transaction unit according to an aspect of the invention. All elements shown in Fig. 3 and described with reference to Fig. 3 are identical to corresponding elements of Fig. 1 if same reference signs are used unless it is otherwise stated. For these same elements, a further explanation is omitted.

The secure token reference register T-Reg is a unit within the transaction system TS and is either a central register or database 1 of the transaction system TS or a decentralized register or database (DLT) of the transaction system TS. The secure token reference register T-Reg comprises a secure memory as a storage unit 1 and a control module 2.

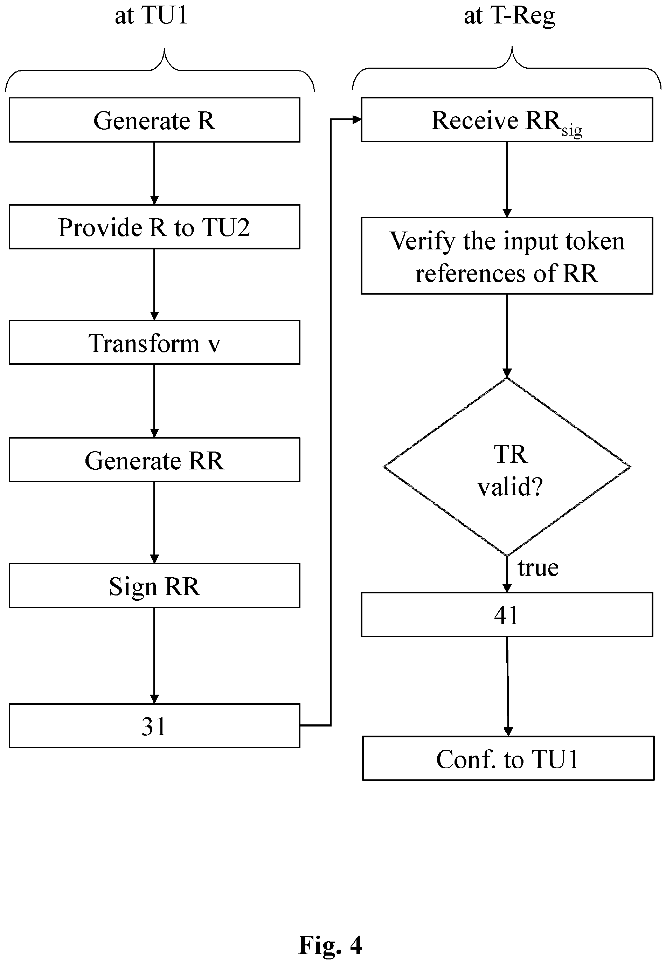

Fig. 4 summarizes a method for assuring the integrity of a central bank digital currency in an electronic payment transaction system according to an aspect of the invention.

In the secure token transaction unit TU1, generating public keys for the at least two input tokens. Further, an output public key is provided in TU1, as described above. Next, the token values are transformed according to a change modification which allows a flexible number of input tokens and output tokens. Based on the generated token references, the replacement request RR is generated, which may be optionally stored as proof in TU1. The replacement request RR is signed based on a combination of the private keys r of the input tokens T. Next, the signed replacement request RR is sent to the secure token reference register T-Reg.

In the T-Reg, the signed replacement request RR is received and verified / validated. Only if the input tokens are valid, the output token reference TR is stored in the T-Reg, preferably along with the replacement request RR, and a register confirmation is sent to the secure token transaction unit TU1.

Fig. 5a and 5b show two alternative embodiments of the data structure representing a signed replacement request according to an aspect of the invention.

The data structure of the replacement request of Fig. 5a comprises a command identifier CO, two tagged input token references TRa;TRb, one tagged output token reference TRc and a single signature sig, which may be generated as outlined above. Each tagged token reference TTR comprises a tag code 5, which indicates whether a token reference TR is related to an input token or an output token. Further, the tag code 5 may determine the version of the token reference TR. Preferably, the tag code 5 is stored in a single byte.

With respect to the embodiment of Fig. 5a, the exemplary embodiment of Fig. 5b additionally comprises an input token number 6 which specifies how many input token references will follow. The first token reference after the specified number of input token references therefore is an output token reference. In this embodiment, the tag code may be less complex, however, an additional storage space for the input token number 6 is required.

Fig. 5 c and 5d show two alternative embodiments of the data structure representing a signed replacement request for a chain of two switch modifications according to an aspect of the invention.

As expressed earlier, a transaction within the TU-Lay does not require a communication link to the T-Reg of the TS. The TS is set up to perform a transaction offline, i.e., without a communication link to the T-Reg. A corresponding registration of token T may therefore be temporally downstream of a transfer of token T to a TU.

To catch up the registration of tokens T, the secure token transaction unit TU may use the inventive replacement request to register multiple tokens T in a batch. According to Fig. 5c, the input token references and output token references of each token transaction may be grouped and concatenated in the replacement request, wherein each token reference is assigned a respective tag code 5. The tag code 5 may determine which input token references and which output token references are related. This embodiment has the advantage, that the token value check for each token transaction may be calculated directly for each group. The replacement request RR further comprises a single signature based on a combination of all private keys of the input token subject to the replacement request RR. So, all input token references may be verified using a single verification step.

According to Fig. 5d, each group of input token references and output token references further comprises an input token number 6, similar to the embodiment of Fig. 5b.

According to one particular use case, the direct token transaction between two participants each having a secure token transaction unit may be confirmed with delay, e.g., when the participant sending the token does not know or cannot confirm the token value to be transferred. The secure token transaction unit may be a token-wallet hosted by a respective financial service provider.

According to this use case, the participant sending the token, also referred to as sender, presents a static code in a one-way communication, such as a QR code comprising the wallet ID, i.e., the identification of the secure token transfer unit TU-ID, to the participant receiving the token, also referred to as recipient. The recipient subsequently defines a transaction amount. Next, the recipient requests a token transaction for the defined transaction amount via the respective financial service provide from the financial service provider of the sender. The financial service provider of the sender, in turn, requests an approval from the sender for the transaction amount, wherein the payment approval may be, e.g., realized as SMS code or link that is provided to the sender. Upon payment approval, the transaction is executed.

This procedure may be improved by a two-fold approach. First, the sender may provide an approval information comprised in the QR-Code and/or second, the sender generates and stores tokens for such kind of transactions at the respective financial service provider beforehand thereby approving the transaction in advanced.

The sender may configure a predetermined quota at the respective financial service provider which is permanently blocked to guarantee the payment at any time. Above method therefore may be simplified to: The sender configuring the availability of a predefined number of tokens, each representing a predefined maximal token value, such as 100 €. It may be sufficient to configure up to five tokens, which may be also referred to as pull-tokens. Next, the financial service provider generates unique pull-tokens, accordingly, wherein each pull-token comprises the signature of the token-wallet of the sender and may be using in offline transactions. Further, following the steps outlined above, wherein the sender may authorize the payment in advance by way of the initial configuration of the sender. Hence, the transaction can be directly executed between the financial service providers.

### REFERENCE SIGNS

- TS: Electronic (payment) transaction system
- TU: Secure token transaction unit in TS, wallet
- TU-ID: Identification of TU, Wallet-ID
- T-Reg: Token reference register
- 1: Storage unit of T-Reg
- 2: Control module of T-Reg
- Reg-LAY: Registration layer
- TU-LAY: Token transfer layer
- RR: Registration request, replacement request
- RR_{sig}: Signed RR
- T: Token
- TR: Token reference
- TTR: Tagged token reference
- v: Token value of T
- r: Secret, private key of token-individual key pair
- R: Public key of token-individual key pair
- CO: Command
- sig: Signature
- 3: Secure memory of TU
- 4: Control module of TU
- 5: Tag
- 6: Input token number
- 15: Transfer of token
- 16: Change modification
- 21: Generate token reference
- 22: Generate RR
- 31: Registration request
- 41: Replace TR by remove TR and store TR

## Claims

1. A secure token transaction unit within an electronic payment transaction system, the secure token transaction unit comprising:
- a secure memory for storing a plurality of tokens, wherein each token comprises a token-individual token secret, preferably a private key of a token-individual cryptographic key pair and a token value;
- a control module which is adapted to:
a) generate, for at least two input tokens of the plurality of tokens, a public key using a cryptographic function based on the private key of each token, wherein the token value and the public key form a token reference, resulting in at least two input token references;
b) transform the token values of the at least two input tokens to generate at least one output token value, wherein the at least one output token value and at least one output public key form at least one output token reference;
c) generate a replacement request comprising, the at least two input token references and the at least one output token reference;
d) generate a combined key by combining the private keys of the at least two input tokens;
e) sign the replacement request using the generated combined key; and
f) send the signed replacement request to a secure token reference register of the electronic payment transaction system.

2. The secure token transaction unit of any of claims 1, wherein the replacement request further comprises a secure replacement command identifier that is represented by a command type code, wherein each of the input token references and the output token references is assigned a tag code, wherein the tag code specifies whether a respective token reference is an input token reference.

3. The secure token transaction unit of claim 1 or 2, wherein the control module is further adapted to
h) generate an initial transfer request related to an output token reference; and
i) send the initial transfer request to the further secure token transaction unit via the direct secure communication direction.

4. The secure token transaction unit of any of claims 1 to 3, wherein the control module is further adapted to
j) receive a replacement confirmation of the secure token reference register; and
k) verify the replacement confirmation and/or
l) send the replacement confirmation to the further secure token transaction unit.

5. The secure token transaction unit of any of claims 1 to 4, wherein the combination of the private keys is generated by adding the private keys.

6. The secure token transaction unit of any of claims 1 to 5, wherein the control module is adapted to sign the register request based on the combination of the private keys of the at least two input tokens based on an elliptic curve digital signature algorithm, ECDSA.

7. The secure token transaction unit of any of claims 1 to 6, wherein the control module is further adapted to
l) establish a direct secure communication connection to the further secure token transaction unit;
m) generate at least one cryptographic key pair for the at least one output token comprising at least one output private key and at least one output public key and send the at least one output private key to the further secure token transaction unit via the direct secure communication connection; or
n) receive the at least one output public key from the further secure token transaction unit via the direct secure communication connection.

8. The secure token transaction unit of any of claims 2 to 7, wherein the replacement request comprises multiple tagged input token references and multiple tagged output token references related to multiple token transactions, wherein each tagged input token reference and each tagged output token reference comprise the tag code, wherein the tag code specifies related input token references and output token references, wherein the control module is adapted to sign the replacement request based on the combination of the private keys of the multiple input token references.

9. A terminal device comprising a secure token transaction unit according to one of the preceding claims or an electronic wallet, wherein the electronic wallet comprises the secure token transaction unit according to one of the preceding claims.

10. A secure token reference register within an electronic payment transaction system, the secure token reference register comprising:
- a secure memory for storing registered token references;
- a secure communication interface for receiving and sending data to one or more secure token transaction units of the electronic payment transaction system;
- a control module which is adapted to
a) receive a signed replacement request from the secure token transaction unit, wherein the signed replacement requests comprises at least two input token references, at least one output token reference, and one signature generated based on a combination of the private keys related to the at least two input token references;
b) determine whether the at least two input token references are valid by verifying the at least two token references based on the signature;
c) if the at least two input token references are valid, store the at least one output token reference in the secure memory; and
d) if the at least two input token references are valid, send a replacement confirmation to the secure token transaction unit.

11. The secure token reference register according to claim 10, further comprising
- a verification unit, wherein the verification unit is adapted to determine whether the at least two input token references are valid and/or
- a token value check unit, wherein the token value check unit determines whether a transaction of token values according to the replacement command is valid,
wherein the control module is adapted to store the at least one output token reference only if the verification unit and/or the token value check unit successfully validate the received replacement request.

12. The secure token reference register according to claim 10 or 11, wherein the control module is further adapted to generate a cryptographic key pair, comprising a private key and a public key, and to sign the replacement confirmation based on the generated private key, wherein the signed replacement confirmation comprises the generated public key.

13. An electronic payment transaction system comprising at least two secure token transaction units according to any of claims 1 to 8 and a secure token reference register according to any of claims 10 to 12.

14. A method for assuring the integrity of a central bank digital currency in an electronic payment transaction system, the electronic payment transaction system comprising at least two secure token transaction units and a secure token reference register, the method comprising:
a) generating, for at least two input tokens of a plurality of tokens stored in a secure memory of a first secure token transaction unit, a public key using a cryptographic function based on a private key of each token, wherein the token value and the public key form a token reference, resulting in at least two input token references;
b) providing at least one output public key assigned to the second secure token transaction unit in the first secure token transaction unit;
c) in the first secure token transaction unit, transforming the token value of the at least two input tokens to generate at least one output token value, wherein the at least one output token value and the at least one output public key form at least one output token reference;
d) in the first secure token transaction unit, generating a replacement request comprising the at least two input token references and the at least one output token reference;
e) in the first secure token transaction unit, generate a combined key by combining the private keys of the at least two input tokens;
f) in the first secure token transaction unit, signing the replacement request using the generated combined key;
g) the first secure token transaction unit sending the signed replacement request to the secure token reference register of the electronic payment transaction system;
h) the secure token reference register receiving the signed replacement request from the first secure token transaction unit;
i) determining in the secure token reference register whether the at least two input token references are valid by verifying the at least two input token references based on the signature;
j) if the at least two input token references are valid, storing the at least one output token reference in a secure memory of the secure token reference register; and
k) if the at least two input token references are valid, the secure token reference register sending a register confirmation to the first secure token transaction unit.

15. A data structure for storing a signed replacement request, the data structure comprising
- a secure replacement command identifier being represented as a single byte command type code;
- at least two tagged input token references, wherein each tagged input token reference comprises an input tag code and an input token reference comprising an input token value and an input public key,
- at least one tagged output token reference, wherein each tagged output token reference comprises an output tag code and an output token reference comprising an output token value and an output public key,
- a secure signature being generated based on a combination of the private keys related to the at least two tagged input token references,
- wherein the secure replacement command identifier, the at least two tagged input token references, the at least one tagged output token reference and the secure signature being concatenated in the data structure, wherein the data structure, upon being received by a secure token reference register causes the secure token reference register to verify the signed replacement request and store the at least one output token reference in a secure memory of the secure token reference register.
